# EUROPEAN PATENT APPLICATION

(11) **EP 1 738 852 A1**
(43) Date of publication of application: **03.01.2007**
(21) Application number: 05106816.1
(22) Date of filing: 25.07.2005
(51) Int. Cl.: B23D 55/04, B27B 25/00

(54) **Workstation for a bandsaw**

(30) Priority: 30.06.2005 IT BS20050080
(71) Applicant: Mz Project S.n.c. di Mazzola A. & Zappa A., 22066 Mariano Comense CO (IT)
(72) Inventor: ZAPPA, Armando, 22072, CERMENATE (Como) (IT)
(74) Representative: Crippa, Paolo Ernesto

(57) **Abstract**

The invention relates to a machine for sawing pieces of solid wood and the like. The machine (1) comprises a chain saw unit (2) and a positioning device (5). The chainsaw (2) in turn, comprises: a dragging flywheel (14) and an idle flywheel (15), drive systems which rotate the dragging flywheel (14) and a chain blade (21) wrapped around the flywheels and closed onto itself so that it moves along a closed path. The path of the blade (21) has an active stretch (210) which defines a cutting plane (p2) facing the positioning device (5) to saw a piece (11) supported by it. The positioning device (5) is mobile in a controlled way along a first direction X, parallel to the cutting plane (p2), and mobile in a controlled way along a second direction Y, perpendicular to the cutting plane (p2). The positioning device (5) comprises a number of suction cups (13) for fastening the piece (11) to the positioning device (5).

## Description

The present invention refers to a machine for sawing unfinished products made of wood, such as sawing planks.

This type of machine saw is particularly suitable for creating planks from cutting blocks of solid wood.

It is known to be strongly felt, in the field of manufacture of wooden planks for flooring for example, that there is a need to create standard sized planks from very thick blocks of solid wood.

Other needs linked with this particular production regard the production speed and maintenance of set quality standards.

Another need connected with this particular production is that of reducing the amount of solid wood scrap to the minimum.

To perform these operations it is standard practice to use machine saws equipped with a number of blades arranged parallel and set at a distance equal to the thickness required for the planks being produced.

In these machines, the block of solid wood is carried towards the blades by a series of rollers and sometimes by a special pushing device. At the end of a single cutting phase, the block of solid wood is sectioned into a set amount of planks.

These machine saws, while being satisfactory from many points of view, also present considerable problems.

Firstly, they guarantee fast and efficient production only for large numbers of pieces, proving inefficient for small amounts due to the complexity of the preparatory phase, especially in relation to the positioning of the individual blades, which must be set at just the right distance from one another.

Moreover, these existing machine saws use blades mounted on a frame with alternative movement. This characteristic is the direct result of the particular configuration of the blades, arranged parallel. The use of blades with alternative movement means that the cutting speed is cyclic. In each cycle, the blade speed varies from zero to a maximum positive value, diminishing until it stops, then inverting the movement and reaching a maximum negative value, then slowing right down until it stops again to then begin the cycle once more. In view of this, it is obvious that a blade with alternative movement cannot guarantee an ideal cutting speed. Moreover, the short distance travelled by the blade does not allow the teeth to be effectively freed from woodchips and sawdust.

The problem lying at the basis of the present invention is that of inventing a machine saw which has the structural and functional characteristics to satisfy the above requirements.

This problem is solved by a machine saw like that described in claim 1. Other constructive forms of the invention are described in the subsequent claims.

Further characteristics and advantages of the machine invented are described in a preferred, but not restrictive, example of construction, where:

- figure 1 shows a prospective overall view of a form of construction of a machine saw according to the invention;

- figure 2 shows a partial section along axis X of figure 1;

- figure 3 shows a prospective view of certain components of a machine according to the invention;

- figure 4 shows a raised side view of certain components of a machine according to the invention;

- figure 5 shows a prospective view of a component of a machine according to the invention; and

- figure 6 shows a prospective view of certain components of a machine according to the invention;

- figures 7.1 and 7.2 shows a detailed view along axis X of figure 6 in two different configurations;

- figure 8 shows a raised side view of the components of the machine shown in figure 6; and

- figure 9 shows and schematic plan and partial section of a detail of a machine according to the invention.

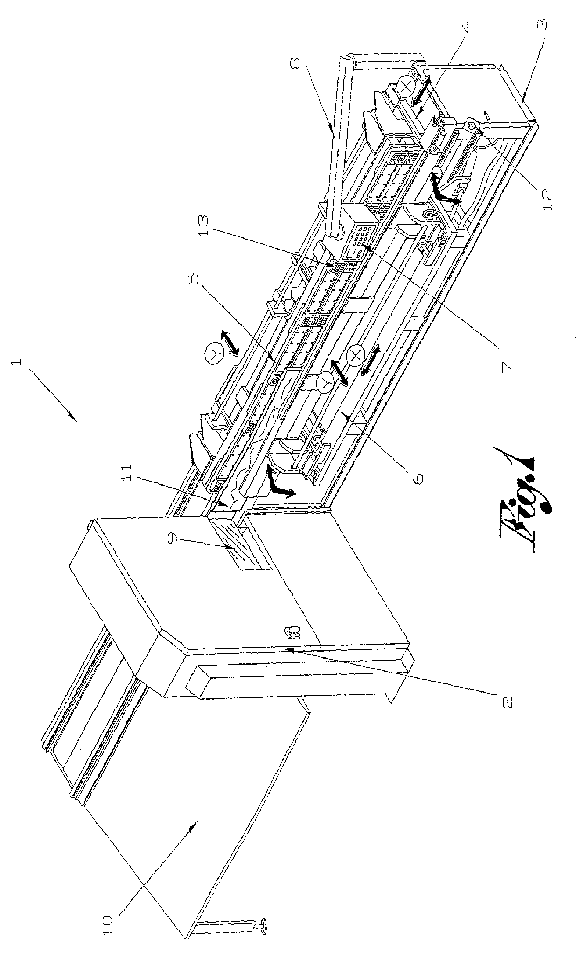

As can be seen from the figures, the number 1 has been used to indicate the overall machine according to the invention. The machine 1 comprises a chain saw unit, indicated with the number 2, and a trolley base, indicated with the number 3, as well as a control panel, indicated with the number 7 (Figure 1).

According to a constructive form, the base 3 is in the shape of a parallelepiped. Preferably, the base 3 is made of rounded, ribbed and welded metal sheeting, equipped with doors for inspection and internal maintenance, as well as cleaning. The upper part of the base 3 houses straight runners 28 for the movement of a trolley 4. The trolley 4, which supports and moves a positioning device 5 described herein, is moved by a kinematical chain comprising a first motor 24, a gear and a rack 29 which are operatively linked together.

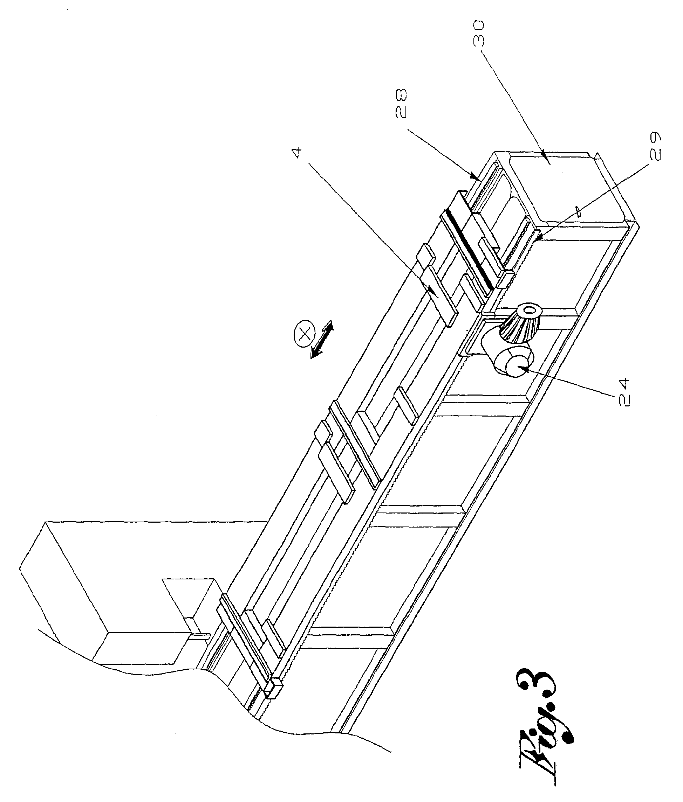

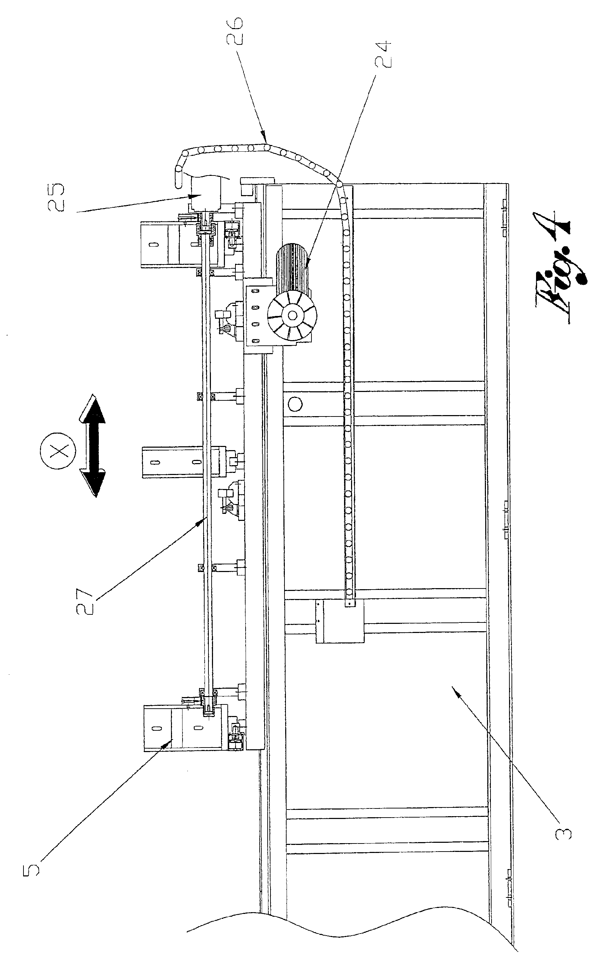

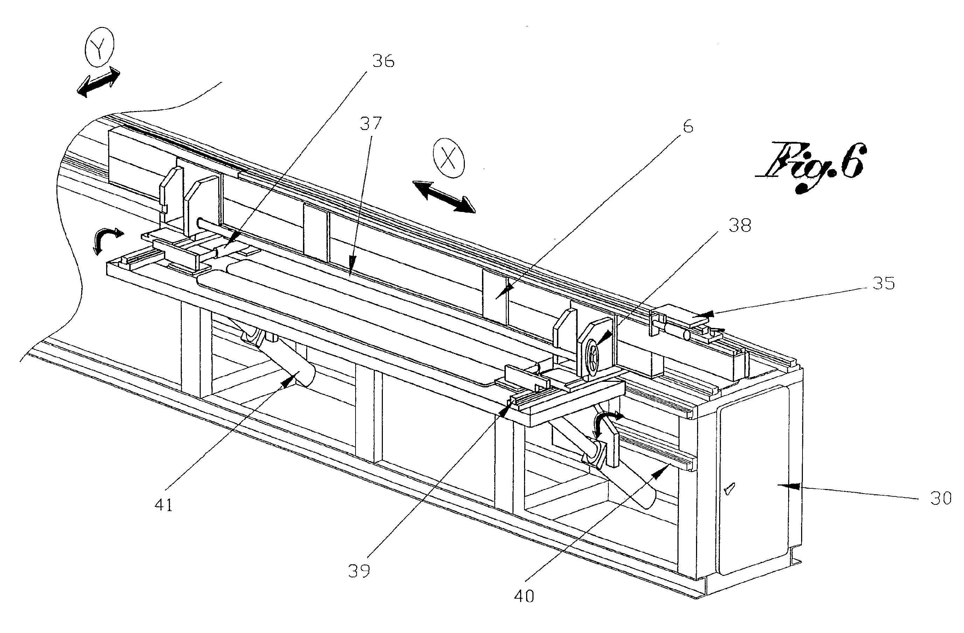

The movement obtained thus for the trolley 4, takes place along a first axis of the machine, indicated as axis X (Figures 1, 3, 4, 6 and 8).

The upper part of the trolley 6 houses straight runners 33 for the movement of the positioning device 5. The positioning device 5 is moved by a kinematical chain comprising a second motor 25, a transmission shaft 27, at least one gear and at least one rack 31 which are operatively linked together.

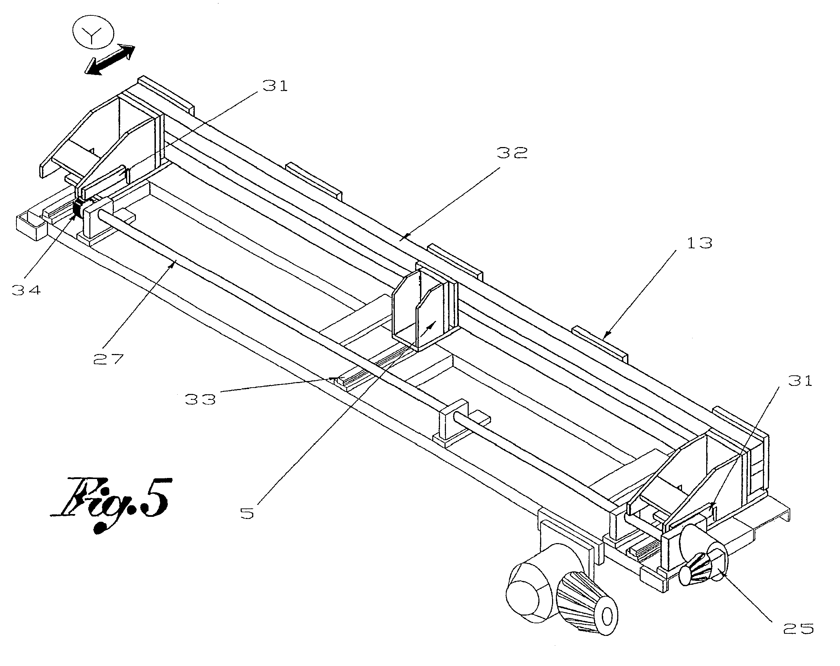

The movement obtained thus for the positioning device 5, takes place along a second axis of the machine, perpendicular to axis X and indicated as axis Y (Figures 1, 2, 5, 6 and 7).

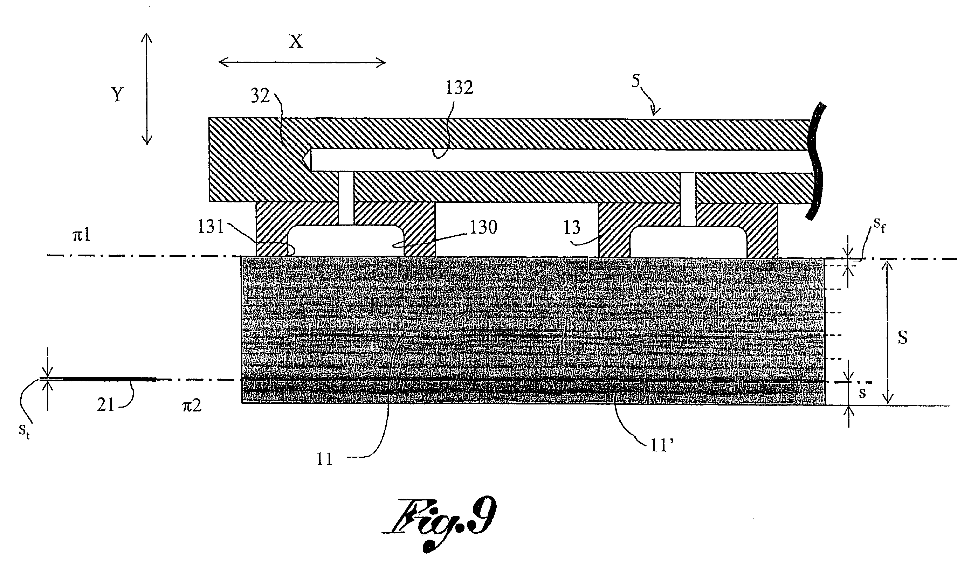

The positioning device 5 has a support 32 which supports a series of suction cups 13. As drawn in figure 9, each of the suction cups 13 comprises a cavity 130 surrounded by a flat edge 131. The edges 131 of the suction cups 13 are aligned in an arrangement on a single flat surface represented by a dotted line in figure 9 and indicated as p1. The cavities 130 are connected to a pneumatic vacuum system 132, which can be controlled using a manometer 12.

When a body, such as a piece 11 of solid wood to be processed, is placed on the plane p1 of the suction cups 13, the pneumatic vacuum system 132 is able to create a depression inside the cavities 130 closed by the same surface of the piece 11.

The depression created by the vacuum system 132 inside the cavity 130 is able to support and firmly hold the piece 11 of solid wood to be processed, even while the blade 21 is working.

In accordance with a form of construction of the invention, the suction cups 13 can be moved, positioned and fastened to the support 32, according to specific requirements. In this way, the positioning device 5 is able to support and properly hold the piece 11, regardless of its size and proportions.

On one side of the base 3, there is a chainsaw 2, completely protected by metal safety guards and by a screen 9 for the blade 21, made of polycarbonate for example.

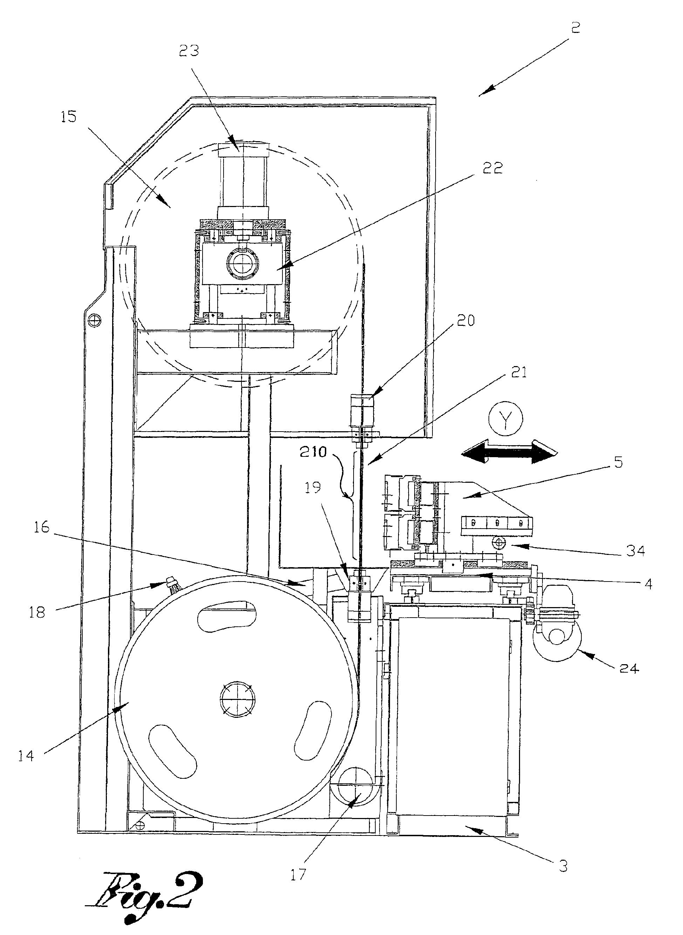

The structure of the chainsaw 2 supports an upper flywheel 15 and a lower flywheel 14, made of cast iron or aluminium for example, and other accessory components, such as the lower and upper blade guides, indicated with numbers 19 and 20 respectively, the brushes 18 for cleaning the flywheels and suction vents 16 and 17 for eliminating the dust produced when cutting the pieces (Figure 2).

The lower flywheel, or dragging device, 14 is connected to a special motor, while the upper flywheel 15 is idle and supported by a device 23 to control the tension of the blade 21.

Behind the chainsaw 2 there is a metal chute 10 to carry the sawn pieces to the collection and evacuation system, such as a conveyor belt suitable for carrying the sawn pieces towards the next crafting processes.

Advantageously, in its essential aspects, the machine 1 for processing wooden pieces 11 and the like, comprises a dragging flywheel 14 and an idle flywheel 15, drive systems which rotate the dragging flywheel 14 and a chain blade 21 wrapped around said dragging flywheel 14 and said idle flywheel 15. The blade 21 closes onto itself so that it moves along a closed path. The path formed by the blade 21 presents an active stretch 210 (Figure 2) which defines a cutting plane p2 facing trolley 4, to saw a piece 11 supported by the positioning device 5.

Trolley 4 is mobile in a controlled way along the direction of axis X, parallel to the cutting plane p2 defined by the active stretch 210 of the path of the blade 21.

The positioning device 5 is mobile in a controlled way along the direction of axis Y, perpendicular to the cutting plane p2 defined by the active stretch 210 of the path of the blade 21.

The positioning device 5 also comprises a series of suction cups 13 for supporting and holding the piece to be processed 11, also during the action of the blade 21.

In accordance with a form of construction, the position of at least one of the blade guides 19 and 20 can be adjusted along the path of the chain blade 21, to extend or contract the active stretch 210 of said path.

In accordance with a form of construction, the machine 1 also comprises an apparatus for automatically controlling the function on the base of parameters set by the user.

The automatic control apparatus can comprise an electronic processor, which can be incorporated into the control panel 7. The electronic processor is able, using appropriate software, to perform the numeric control of the movement of the positioning device 5, the trolley 4, the screen 9, etc.

In accordance with a form of construction, the machine 1 also comprises a loading device 6, which collects the piece 11 and presents it to the positioning device 5.

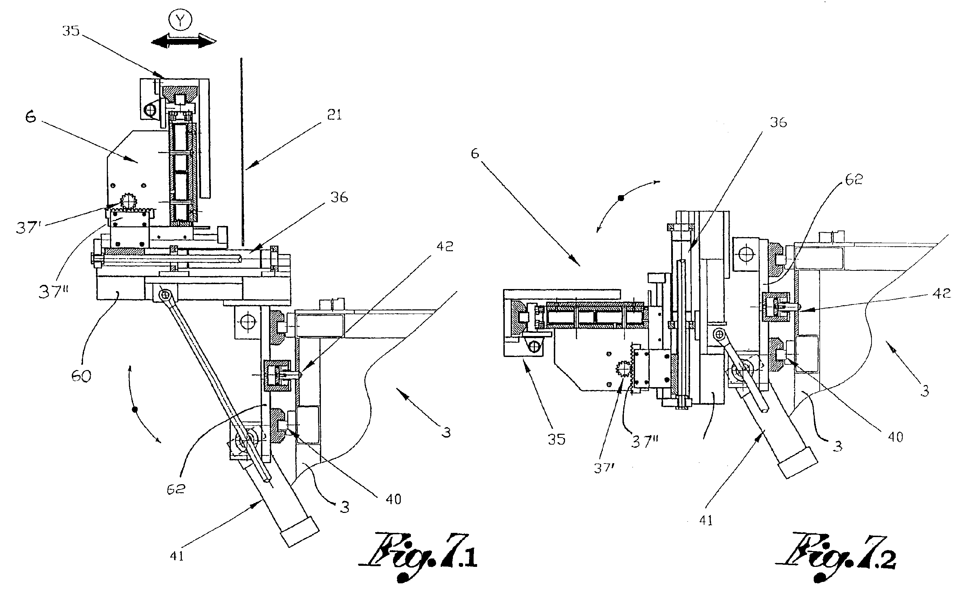

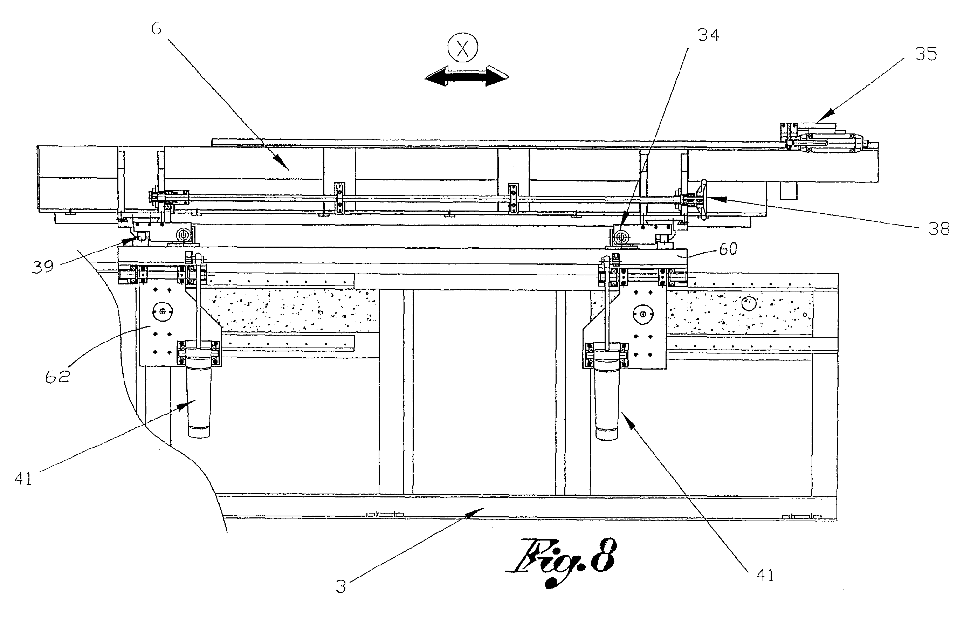

In accordance with the form of construction represented in figures 7 and 8, the loading device 6 comprises a trolley 62 which runs along the base 3 on special runners 40. The runners 40 are positioned along the direction of axis X.

A frame 60 is hinged to the trolley 62. This frame 60 rotates between a first loading position (shown in figure 7.2) and a second thrust position (shown in figure 7.1). In accordance with the form of construction shown, the frame 60 can rotate under the action of special cylinders 41, which can be pneumatic or hydraulic for example.

The part of the frame 60 opposite to the trolley 62 houses straight runners 39 for moving a piece presentation table 61. The piece presentation table 61 is configured to be moved independently by cylinders 36 and by a kinematical chain comprising a flywheel 38, a shaft 37, a gear 37' and a rack 37" which are operatively linked together.

The movements obtained thus for the piece presentation table 61 take place along an axis which is perpendicular to the axis X and which, when the loading device 6 is in the second thrust position, is parallel to axis Y (Figures 1, 6 and 7.1).

The operating method of the machine saw 1 according to the invention is described below.

In its essential form, the operating method envisages that a piece 11 to be processed be placed in proximity to the positioning device 8. The action of the suction cups 13 holds the piece 11 in the required position. The positioning device 5, moving along axis Y, is positioned at the required distance from the cutting plane p2 defined by the blade 21. This distance determines the thickness of the plank 11' which will be obtained by sawing the piece 11. The trolley 4 is then moved along axis X so that the piece 11 is brought into contact with the blade 21 and is pushed against it until the first plank 11' has been completely sawn.

Subsequently, the positioning device 5 is moved in direction Y, away from the cutting plane p2, and then in direction X back to its original position.

At this point the processing cycle starts again and, with the movement along axis Y, the positioning device 5 is positioned at a new distance from the cutting plane p2, a distance which is determined on the basis of the thickness s of the next plank 11' which is to be obtained by sawing the piece 11.

The operating method continues for the cutting cycles, gradually reducing the thickness s of the piece 11. When the thickness of the piece 11 is less than, or preferably the same as that required for a plank 11', the suction cups 13 release the piece 11 along with all the other planks 11' and the process must start again with another solid piece.

In accordance with the form of construction of the invention in which the machine 1 also comprises a piece of apparatus to automatically control the operation, the method of use of the machine also includes a phase for setting the parameters required to automatically control operation.

For example, if the automatic control apparatus comprises a processor for the numeric control of the movement of the positioning device 5, the trolley 4, the screen 9, etc., the parameter setting phase will include a phase for programming the software to control the machine 1.

In accordance with a form of construction of the invention, the method for using the machine also includes a phase for determining the optimal thickness s of the planks 11'. This phase envisages, first of all, that the thickness s of the piece 11 to be sawn be measured. It is then necessary to determine the thickness st of the cut to be obtained with the chain blade 21. Identifying a first thickness s' plausible for the planks 11' and also considering the thickness st of the cuts, it is possible to determine the number N of planks 11' that can be obtained from the single piece 11. The thickness sf of any scrap obtained by cutting N planks 11' with a thickness s' can be distributed across all the N planks 11' so that a new thickness s" is achieved for the planks 11' which leaves no scrap.

Proceeding in this way, it is possible to adapt the operation of the machine 1, with simple actions to set the automatic control parameters, for example with quick, easy actions to program the control software of the machine 1, so that there is no scrap, however thick the piece 11 may be.

In accordance with a form of construction of the invention, in which the machine 1 also includes a loading device 6, the method of use of the machine 1 also includes the phases of use of the loading machine 6.

More particularly, with the loading device 6 in the first loading position, the piece 11 is positioned on the piece presentation table 61. Then the loading device is brought into the second thrust position and the cylinders 36 are activated to move the piece presentation table 61 along axis Y. In this way the piece 11 is positioned on plane p1 of the suction cups 13.

Should the configuration of the loading device 6 be adapted to a new type of piece 11, using the flywheel 38 it is possibly to finely regulate the distance of the piece presentation table 61 from plane p1 of the suction cups 13.

As can be seen from that described above, thanks to the machine proposed, it is possible to satisfy all the needs currently unmet by the solutions available.

The machine saw 1 according to the invention and the operating method of this machine allow the efficient and extremely flexible production of top quality planks.

Efficiency is closely linked with the minimisation of scrap. The use of suction cups allows the machine 1 to hold the piece 11 without using presses, clamps or the like and therefore without ruining any part of the surface of the piece 11.

Furthermore, the restriction by suction cups 13 means that even when the thickness of the piece 11 is considerably reduced, it remains flat. The piece 11 rests on plane p1 of the suction cups 13 against which it is held by atmospheric pressure. The use of mechanical restrictions on the other hand requires the clamping of two opposite portions of the piece between jaws and, especially when the thickness of the piece is reduced, this can lead to instability and the consequent loss of the piece's planarity and that of the planks cut from it.

The use obtained using the suction cups 13 also allows the elimination of any restriction to the thickness s of the last plank 11'. The use of any kind of conventional mechanical restriction on the other hand involves a lateral engagement with the piece 11, posing a restriction to the thickness s of the last plank 11'.

The flexibility of the invention is obvious when considering the ease with which the production material can be changes, both in terms of solid pieces 11 to be processed and in terms of planks 11' produced. It is sufficient to regulate the subsequent positions of the positioning device 5 along axis Y to enable every kind of thickness S of the piece 11 and every kind of thickness s of the planks 11' produced. This flexibility is particularly advantageous as it enables the elimination of the preliminary operation of cutting the piece 11 to size, as is necessary with the machines currently available, which involves considerable consumption in terms of time and raw material.

Lastly, the use of a chainsaw 2 guarantees better cutting quality than can be obtained using an alternate movement blade. The chain blade always guarantees optimal speed and any residue is removed as it travels along its path. For this reason, the same chain blade can be used to saw every kind of piece of wood, regardless of how long it has been aged.

Lastly, thanks to the use of a chain blade, it is possible to cut pieces 11 of considerable size at a relatively sustained speed.

Obviously the machine described and illustrated with reference to the figures can be subject to numerous alterations and variants by a technician in the sector to suit contingent and specific requirements.

It is obvious that these changes are to be considered as part of the context of protection of the invention, as defined by the following claims.

## Claims

1. Machine for sawing pieces of solid wood and the like, comprising a chainsaw (2) and a positioning device (5), with said chainsaw (2) comprising: a dragging flywheel (14) and an idle flywheel (15), drive systems which rotate said dragging flywheel (14) and a chain blade (21) wrapped around said dragging flywheel (14) and said idle flywheel (15) closed onto itself so that it moves along a closed path, said path having an active stretch (210) defining a cutting plane (p2) and facing said positioning device (5) to saw a piece (11) supported by said positioning device (5); said positioning device (5) being mobile in a controlled way along a first direction, or axis X, parallel to said cutting plane (p2), and being mobile in a controlled way along a second direction, or axis Y, perpendicular to said cutting plane (p2); in which said positioning device (5) comprises a number of suction cups (13) for fastening said piece (11) to said positioning device (5).

2. Machine according to claim 1, in which said positioning device (5) is supported by a trolley (4), said trolley (4) being mobile in a controlled way along said axis X, and said positioning device (5)being mobile with respect to said trolley in a controlled way along said axis Y.

3. Machine according to claim 2, in which said trolley (4) is supported by a base (3) fastened with respect to said cutting plane p2.

4. Machine according to any of the previous claims, in which said suction cups (13) are connected to a pneumatic vacuum system (132).

5. Machine according to claim 4, in which said pneumatic vacuum system (132) is able to create a depression to support and firmly hold a piece (11) of solid wood, even during the action of said blade (21).

6. Machine according to any of the previous claims, in which each of said suction cups (13) comprises a cavity (130) surrounded by a flat edge (131), said edges (131) of said cups (13) being aligned in an arrangement on a single flat surface (p1).

7. Machine according to any of the previous claims, in which said suction cups (13) can be moved, positioned and fastened to said support (32)on the basis of specific requirements.

8. Machine according to any of the previous claims, in which said chainsaw (2) also comprises lower blade guides (19) and upper blade guides (20).

9. Machine according to any of the previous claims, in which said chainsaw (2) also comprises brushes (18) for cleaning said flywheels (14, 15) and suction vents (16, 17) for eliminating dust produced during cutting.

10. Machine according to any of the previous claims, in which said idle flywheel (15) is supported by a device (23) to control the tension of said blade (21).

11. Machine according to any of the previous claims, in which said machine 1 also comprises a loading machine (6) for collecting said piece (11) and presenting it to said positioning device (5).

12. Machine according to the previous claim, in which said loading device (6) comprises a trolley (62) running along said base (3) on special runners (40) positioned along axis X.

13. Machine according to the previous claim, in which said loading device (6) comprises a frame (60) hinged to said trolley (62), rotating between a first loading position and a second thrust position.

14. Machine according to the previous claim, in which said loading device (6) comprises a piece presentation table (61) moving along an axis perpendicular to axis X and which, when said loading device (6) is in said second thrust position, is parallel to axis Y.

15. Machine according to any of the previous claims, in which said machine (1) also comprises an appliance for automatically controlling its operation on the basis of parameters set by the user.

16. Machine according to the previous claim, in which said automatic control apparatus comprises an electronic processor (7).

17. Machine according to the previous claim, in which said electronic processor can, using appropriate software, perform the numeric control of the movement of said positioning device (5) and trolley (4).

18. Machine according to the previous claim, in which said electronic processor can, using appropriate software, perform the numeric control of the movement of said positioning device (6).

19. Method for sawing a piece (11) comprising the phases of:
- preparing a chainsaw (2) comprising: a dragging flywheel (14) and an idle flywheel (15), drive systems which rotate said dragging flywheel (14) and a chain blade (21) wrapped around said dragging flywheel (14) and said idle flywheel (15) closed onto itself so that it moves along a closed path, said path having an active stretch (210) defining a cutting plane (p2);
- preparing a positioning device (5) comprising a number of suction cups (13) for fastening said piece (11) to said positioning device (5), said positioning device (5) being mobile in a controlled way along a first direction, or axis X, parallel to said cutting plane (p2), and being mobile in a controlled way along a second direction, or axis Y, perpendicular to said cutting plane (p2);
- preparing said piece (11) on said positioning device (5);
- positioning, with movement along axis Y, said positioning device (5) at a distance so that said cutting plane 82) intersects said piece (11);
- shifting, with movement along axis X, said trolley (4) towards said blade(21) so that said piece (11) is brought into contact with said blade (21) and pushed against it until a first plank (11') has been completely sawn;
- positioning, with movement along axis Y, said positioning device (5) at a distance so that said cutting plane 82) does not intersects said piece (11);
- shifting, with movement along axis X, said trolley (4) away from said blade so that said trolley (4) is brought into its original position.

20. Method according to the previous claim in which the phases of:
- positioning, with movement along axis Y, said positioning device (5) at a distance so that said cutting plane 82) intersects said piece (11);
- shifting, with movement along axis X, said trolley (4) towards said blade(21) so that said piece (11) is brought into contact with said blade (21) and pushed against it until a first plank (11') has been completely sawn;
- positioning, with movement along axis Y, said positioning device (5) at a distance so that said cutting plane 82) does not intersects said piece (11);
- shifting, with movement along axis X, said trolley (4) away from said blade so that said trolley (4) is brought into its original position;
are performed cyclically a number of times.

21. Method according to any of the previous claims in which, when the thickness of said piece (11) is less than, or preferably the same as that required for a plank (11'), said suction cups (13) release said piece (11).

22. Method according to any of the previous claims, in which said method also includes a phase for setting the parameters required by a piece of apparatus to automatically control the operation of said machine (1).

23. Method according to the previous claim, in which said parameter setting phase will include a phase for programming the software needed by a processor to numerically control the operation of said machine (1).

24. Method according to any of the previous claims also including a phase to determine the optimal thickness (s) of said planks (11'), said phase including the sub-phases of:
- measuring the thickness (S) of said piece (11) to be sawn;
determining the thickness of the cut (st) obtained with the chain blade (21)
- identifying a first plausible thickness (s') for said planks (11');
- determining the number (N) of planks (11') obtained from the single piece (11), considering said first plausible thickness (s') and said thickness of the cuts (st);
- calculating the thickness (sf) of any scrap obtaining by cutting said planks (11') with said first plausible thickness (s');
- distributing the thickness (sf) of the scrap across all (N) planks (11'), so as to obtain a new thickness (s") for said planks (11') which leaves no scrap.

25. Method according to any of the previous claims, also including the phase of use of said loading device (6), said phase including the sub-phases of:
- bringing said loading device (6) into said first loading position;
- resting said piece (11) on said piece presentation table (61);
- bringing said loading device (6) into said second thrust position;
- resting, with movement along axis Y of the piece presentation table (61), said piece (11) on the plane p1 of the suction cups (13).
